# EUROPEAN PATENT SPECIFICATION

(11) **EP 3 564 192 B1**
(45) Date of publication and mention of the grant of the patent: **27.07.2022**
(21) Application number: 18759839.6
(22) Date of filing: 17.05.2018
(51) Int. Cl.: C02F 3/20, G05B 13/02, C02F 1/00, C02F 3/30

(54) **CONTROL SYSTEM AND METHOD FOR SEWAGE TREATMENT DEVICE**
SYSTEM UND VERFAHREN ZUR STEUERUNG EINER VORRICHTUNG ZUR BEHANDLUNG VON ABWASSER
SYSTÈME DE COMMANDE ET PROCÉDÉ POUR UN DE DISPOSITIF DE TRAITEMENT DES EAUX USÉES

(30) Priority: 23.03.2018 CN 201810250472
(43) Date of publication of application: 06.11.2019
(73) Proprietor: Soutech Technology Development (Tianjin) Co., Ltd., Tianjin 300000 (CN)
(72) Inventor: ZHANG, Fapeng, Beizhakou Town, JinNan, Tianjin 300050 (CN); YU, Yifan, Beizhakou Town, JinNan, Tianjin 300050 (CN); CAO, Jianshuang, Beizhakou Town, JinNan, Tianjin 300050 (CN)
(74) Representative: Dilg, Haeusler, Schindelmann Patentanwaltsgesellschaft mbH
(86) International application number: PCT/CN2018/087195
(87) International publication number: WO 2019/178926

(56) References cited:
- EP-A1- 2 070 877
- AU-B2- 557 608
- CA-C- 2 041 329
- CN-A- 103 613 189
- CN-A- 105 314 800
- CN-A- 105 776 515
- CN-A- 105 776 515
- CN-U- 205 528 247
- CN-U- 206 512 058
- ES-A1- 2 616 098
- KR-A- 20060 092 660
- US-B1- 6 616 843

## Description

### Technical Field

The present disclosure relates to the technical field of water treatment, in particular, to a control system and method of a sewage treatment device.

### Background Art

At present, in the field of sewage treatment, for the sewage treatment in large municipal sewage treatment plants and for the production sewage treatment of factories, due to their large treatment scale, regular water inflow, and regulating pools usually provided at front ends for ensuring uniform amount and quality of water entering treatment systems as much as possible, parameters and an actual operation stage are designed according to a relatively ideal stable state. In practice, when an entire sewage treatment station is running, the entire system can run steadily, and all electricity consumption devices can be controlled in a unified manner, moreover, various changes can also be processed according to feedback from on-line measuring instruments, to ensure sewage treatment processes to proceed normally. For the case where biological treatment technology is used, a stable growth environment for microorganisms also can be maintained, thus ensuring the treatment effect of the system. Therefore, for large sewage treatment stations, the entire system can be maintained in a good stable state except in some special emergencies. On the contrary, at present in China, due to the advantages of small sewage treatment device such as small amount of construction, short installation period and convenient transportation, a small decentralized sewage treatment device has been gradually adopted for small rural towns to meet the sewage treatment requirement for the entire rural town, which reduces the inconvenience of pipe network construction and the cost input compared with the traditional practice of establishing a urban pipe network to collect sewage from the entire city to large sewage treatment plants. However, the treatment capacity of small sewage treatment device is typically suitable for a shared use by several to dozens of households, with no regulating pool being arranged for keeping the small sewage treatment device's advantages of small occupied area and simple construction. Therefore, small sewage device, regardless of being used for the treatment of domestic sewage (in more cases) or of sewage from small manufacturing enterprises (in less cases), usually has non-uniform amount of inflow water and water quality, and is unable to avoid the direct influence of daily change of water amount on the system, which has a large impact on the system, directly affecting the treatment process and effect, and significantly affecting the growth of microorganisms for the small devices adopting the biological treatment methods, and many deficiencies still exist even when the device is operated periodically according to traditional daily routines. Examples of small scale sewage treatment devices are disclosed in CN 105 776 515 A, AU 557 608 B2 and EP 2 070 877 A1.

### Summary

In view of this, an object of the present disclosure includes providing a control system and method of a sewage treatment device, in order to overcome one of the problems of modelization and poor variable impact resistance of existing small sewage treatment devices, to improve the stability of control system and achieve an energy conservation effect.

In a first aspect, the present invention provides a control system of a sewage treatment device according to claim 1.

In a second aspect, the present invention further provides a control method of sewage treatment device according to claim 6.

The examples of the present disclosure bring at least the following beneficial effects: for the control system and method of sewage treatment device provided by the present disclosure, the single chip microcomputer, and the lift pump and the gas pump which are connected respectively to the single chip microcomputer are included; the lift pump triggers the first switching signal according to the height of water level, wherein the first switching signal includes the starting signal and the shutdown signal; the single chip microcomputer regulates and controls according to the starting signal the delay time of starting to run the gas pump, and generates the delay start signal; alternatively, the single chip microcomputer regulates and controls according to the shutdown signal the delay time of stopping running of the gas pump, and generates the delay stop signal; the gas pump is controlled to perform the aeration and the backflow according to the delay start signal and the delay stop signal. The present disclosure can overcome the problems of modelization and poor variable impact resistance of the existing small sewage treatment devices, improve the stability of control system, and achieve an energy conservation effect.

Other features and advantages of the present disclosure will be stated in the following description, besides, a part of them will be apparent from the description, or can be comprehended through implementations of the present disclosure. The objects and other advantages of the present disclosure can be realized and obtained from the structures specified in the description, the claims and the drawings.

In order to make the above objects, features and advantages of the present disclosure more apparent and easier to be understood, preferred examples are illustrated below to make the following detailed description in combination with the accompanying drawings.

### Brief Description of Drawings

In order to more clearly illustrate technical solutions of the examples of the present disclosure, figures which are needed for the description of detailed embodiments of the present application or the prior art will be introduced briefly below. Apparently, the figures in the following description are for some embodiments of the present application. For a person ordinary skilled in the art, other figures can still be obtained according to these figures without use of creative effort.
- Fig.1: is a schematic view of a control system of a sewage treatment device provided in Example 1 of the present disclosure.
- Fig.2: is a schematic view of another control system of a sewage treatment device provided in Example 1 of the present disclosure.
- Fig.3: is a structural schematic view of a lift pump provided in Example 1 of the present disclosure.
- Fig.4: is a flow diagram of a control method of a sewage treatment device provided in Example 2 of the present disclosure.

### Reference numerals:

- 10-: lift pump;
- 20-: single chip microcomputer;
- 30-: gas pump;
- 40-: sewage treatment device;
- 50-: user end device.

### Detailed Description of Embodiments

In order to make the objects, technical solutions and advantages of the examples of the present application clearer, the technical solutions of the present application will be described below clearly and completely in combination with the figures. Apparently, some but not all of the examples of the present application are described.

At present, compared with the traditional practice of establishing urban pipe network to collect sewage from the entire city to large sewage treatment plants, the small sewage treatment device reduces the inconvenience of pipe network construction and the cost input. However, the treatment capacity of small sewage treatment device is typically suitable for a shared use by several to dozens of households, with no regulating pool being arranged for keeping the small sewage treatment device's advantages of small occupied area and simple construction. Therefore, small sewage device, regardless of being used for the treatment of domestic sewage or of sewage from small manufacturing enterprise, usually has non-uniform amount of inflow water and water quality and is unable to avoid the direct influence from daily change of water amount on the system, which has a large impact on the system, directly affecting the treatment process and effect, and significantly affecting the growth of microorganisms for the small devices adopting the biological treatment methods, and many deficiencies still exist even when the device is operated periodically according to traditional daily routines.

On this basis, the control system and method of sewage treatment device provided in the examples of the present disclosure can overcome the problems of modelization and poor variable impact resistance of existing small sewage treatment devices, to improve the stability of control system and achieve an energy conservation effect.

In order to facilitate understanding the examples, first, what is disclosed by the present disclosure is introduced in detail.

### Example 1

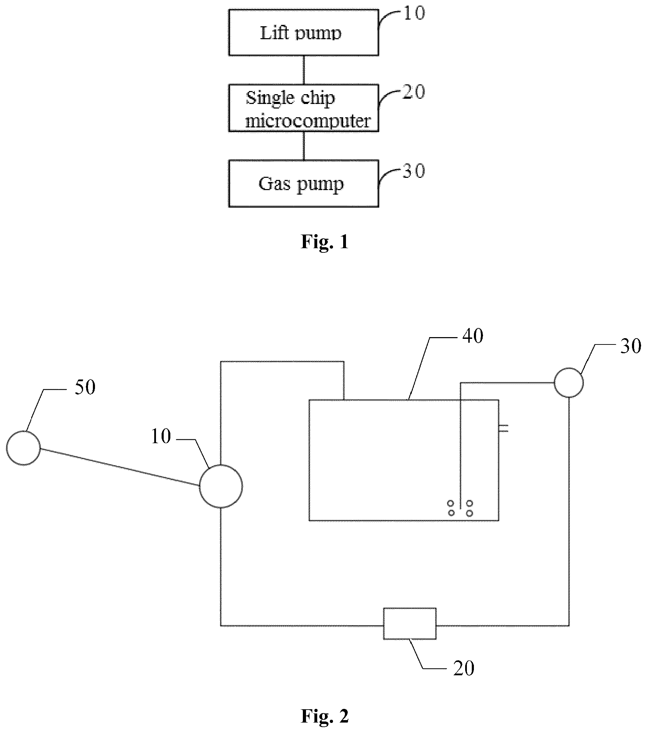

Fig.1 is a schematic view of a control system of sewage treatment device provided in Example 1 of the present disclosure.

Referring to Fig.1 and Fig.2, the control system of sewage treatment device includes: a single chip microcomputer 20, and a lift pump 10 and a gas pump 30 which are connected respectively to the single chip microcomputer 20, and the control system further includes a user end device 50 and a sewage treatment device 40. The sewage treatment device 40 herein is a small sewage treatment device.

The user end device 50 is connected to the lift pump 10 and gathers, through a pipe network, water discharged by users and enables it to flow by gravity into a pool body where the lift pump 10 is located. An amount of water treated by the user end device 50 ranges from 0.5m3/d to 200m3/d. The user end device 50 simply gathers and collects the water discharged from several to dozens of households, to a discharge outlet and enables it to flow by gravity to a small pool where the lift pump 10 is located, with a simple pipe network and a short distance, ensuring the treatment amount within a small range.

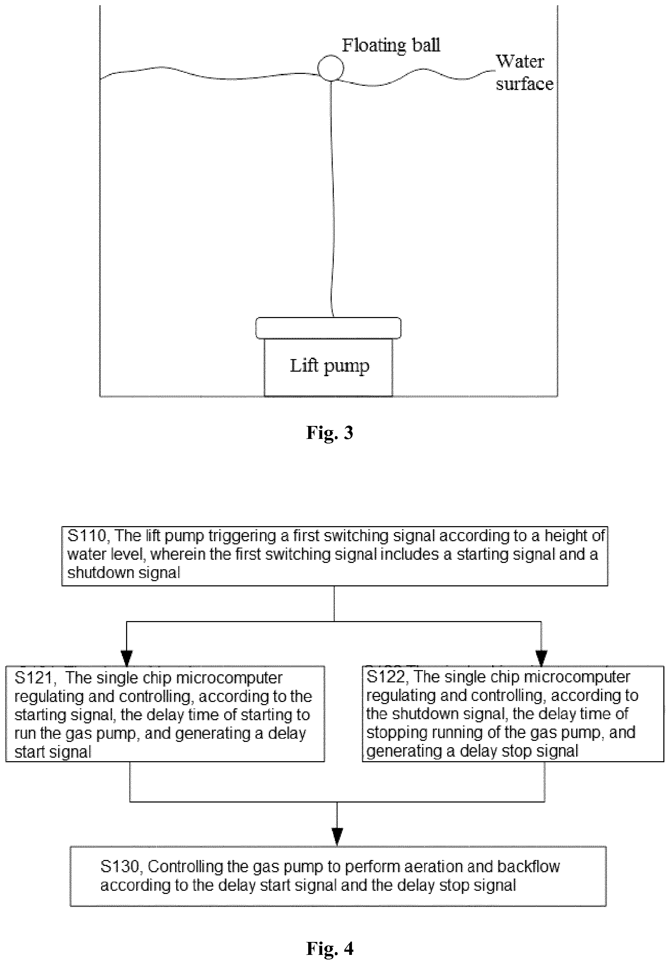

In an optional example of the present application, the lift pump 10 is provided with a floating ball, and the floating ball controls the switch of the lift pump 10 according to a height of water level in the pool body, and further triggers a first switching signal. Referring to Fig.3, the lift pump 10 itself has a floating ball, and is arranged in a pool body of small volume and small occupied area. When the height of a water discharge outlet of the user end device 50 is lower than the height of a water surface in the pool or when the pressure is not sufficient for the water flowing by gravity into a water inlet of the small sewage treatment device 40, the floating ball rises with the height of water level by buoyancy to further control the lift pump 10 to turn on the switch automatically, and to pump sewage to the sewage treatment device 40. Instead of being directly connected to electricity or to a PLC (Programmable Logic Controller), this lift pump 10 is connected to the single chip microcomputer 20, and the single chip microcomputer 20 receives its first switching signal and supplies electricity thereto.

After the lift pump 10 triggers the first switching signal, the single chip microcomputer 20 acquires the first switching signal and regulates and controls a running mode of the gas pump 30 according to the first switching signal, and generates a second switching control signal. The gas pump 30 is controlled to perform aeration and backflow according to the second switching control signal.

The single chip microcomputer 20 regulates and controls a running state of the gas pump 30 by judging a running state of the lift pump 10. The first switching signal is divided into a starting signal and a shutdown signal, its corresponding second switching control signal includes a delay start signal and a delay stop signal. The single chip microcomputer 20 regulates and controls according to the starting signal the delay time of starting to run the gas pump 30, and generates a delay start signal. Alternatively, the single chip microcomputer 20 regulates and controls according to the shutdown signal the delay time of stopping running of the gas pump 30, and generates a delay stop signal.

The floating ball can be connected through a flexible cable to a mechanical switch mounted on the lift pump. When the water surface rises, the floating ball rises with the water surface, and when the water surface rises to or above a predetermined height, the cable connected to the floating ball is taut and pulls the mechanical switch, the mechanical turns to "On state" and emits a starting signal, and this first switching signal can be sent to the single chip microcomputer 20. When the height of liquid surface is lower than a predetermined height, a shutdown signal is emitted.

In another optional example of the present disclosure, an electronic liquid level switch is adopted to replace the floating ball. The water level is detected by a built-in electronic probe, and a detected signal is then processed by a chip. When the water is judged to have reached a predetermined height, the chip outputs a high level, for example 24V or 5V, etc. (type PNP and type NPN are both acceptable). When the water is judged to be lower than a predetermined height, the chip outputs a low level, for example 0V. Signals at high and low levels are read by a single chip microcomputer (the high level is equivalent to the starting signal, and the low level is equivalent to the shutdown signal). When having read a high level, the single chip microcomputer drives the lift pump to work, and when the single chip microcomputer has read a low level, the single chip microcomputer does not drive the lift pump to work.

Specifically, when judging that the lift pump 10 is always in the running state, the single chip microcomputer 20 controls the gas pump 30 to be also in the running state. When judging according to a shutdown signal that the lift pump 10 stops running, the single chip microcomputer 20 regulates and controls the gas pump 30 to make it stop running automatically after delaying for a certain period of time (such as half an hour), i.e., emitting a delay stop signal to the gas pump 30. When judging according to a starting signal that the lift pump 10 starts to run, the single chip microcomputer 20 regulates and controls the gas pump 30 to make it start to run automatically after delaying for a certain period of time (such as ten minutes), i.e., emitting a delay start signal to the gas pump 30. By using the single chip microcomputer 20 to regulate and control the running of the gas pump 30 according to the running state of the lift pump 10, the amount, interval (time period) and delay time of aeration or backflow are controlled, thereby ensuring that when there is no water inflow and the nutrition is insufficient in the small sewage treatment device, avoiding the drawback of aerobic microorganism's internal consumption caused by the continue aeration in aerobic zone and keeping the organisms in a good state, and meanwhile also achieving effects of reducing invalid running time of the gas pump 30 and saving electric energy. By combining the start and stop of the lift pump 10 with the start and stop of the gas pump 30, the small sewage treatment device's capacity of resisting the variable impact of incoming water is greatly enhanced, thus ensuring the effectiveness of the system. Besides, in the above example the single chip microcomputer 20 is chosen as a control main body, which is adapted better to the characteristics of the small sewage treatment device, leading to a reduced bulkiness and a more compact and flexible overall arrangement.

The gas pump 30 is respectively connected to an aeration zone and a gas lifting zone in the sewage treatment device 40 through two gas pipes, and regulates, according to the second switching control signal, valves on the gas pipes to perform aeration and backflow, to provide muddy water of aerobic aeration and gas lift backflow to the system. Specifically, the gas pump 30 is provided outside the small sewage treatment device, has a longer service life and is connected to the small sewage treatment device through gas pipes. The gas pipes are provided with small valves, and by regulating the valves, the amount of aeration and the amount of backflow are enabled to be reasonable and stable.

The valves can be electronic control valves, and the number of the valves is in data connection with the single chip microcomputers. The single chip microcomputer can control the valve's opening degree or control the number of valves in open state, so as to control the amount of aeration and the amount of backflow.

The sewage treatment device 40 is a small sewage treatment device of small overall volume and compact structural arrangement. The sewage treatment scale of the small sewage treatment device is matched with the scale of the user end device 50. Biological treatment methods are often adopted for sewage treatment to make discharge water reach its required standards, wherein the biological treatment methods include AO (Anoxic-Oxic) technology and A2O (Anaerobic-Anoxic-Oxic) technology. The sewage treatment device includes an aeration zone and a gas lifting zone. The treatment measure of muddy water of aerobic aeration and gas lift backflow is provided by the gas pump 30.

The control system of the sewage treatment device provided by the above example is for small sewage treatment device. The start and stop of the lift pump is combined with the start and stop of the gas pump by the single chip microcomputer, so as to reasonably control aeration and backflow and to maintain the stability of microorganism production in the system, hence the small sewage treatment device's capacity of resisting the variable impact of incoming water is greatly enhanced, thus ensuring the effectiveness of the system. Besides, the invalid running time of the gas pump is greatly reduced, making the control method more flexible and pertinent, and also achieving the object of saving electric energy. Moreover, the single chip microcomputer, which is selected as the control main body, is adapted better to the characteristics of small sewage treatment device compared with the traditional control by PLC, thus leading to a reduced bulkiness and a more compact and flexible overall arrangement.

### Example 2

Fig. 4 is a flow diagram of a control method of a sewage treatment device provided in Example 2 of the present disclosure.

Based on the control system of a sewage treatment device provided in the above example, an example of the present disclosure further provides a control method of a sewage treatment device. Referring to Fig.4, the control method of sewage treatment device includes steps as follows:
Step S110, triggering, by the lift pump, a first switching signal according to a height of water level, wherein the first switching signal includes a starting signal and a shutdown signal;
Step S121, the single chip microcomputer regulating and controlling, according to the starting signal, the delay time of starting to run the gas pump, and generating a delay start signal;
   alternatively,
Step S122, the single chip microcomputer regulating and controlling, according to the shutdown signal, the delay time of stopping running of the gas pump, and generating a delay stop signal; and
Step S130, controlling the gas pump to perform aeration and backflow according to the delay start signal and the delay stop signal.

Further, when the height of water level is detected to be higher than a predetermined height, the starting signal is triggered; and when the water level is detected to be lower than the predetermined height, the shutdown signal is triggered.

Further, after receiving the starting signal, the single chip microcomputer emits a delay start signal after a first predetermined time period.

Further, after receiving the shutdown signal, the single chip microcomputer emits a delay stop signal after a second predetermined time period.

The method provided in the example of the present disclosure is the same as the foregoing system example in implementation principle and resulting technical effects. For the sake of concise description, what is not mentioned in the part of example of method can refer to the corresponding contents in the foregoing example of system.

The examples of the present disclosure bring the following beneficial effects: the control system and method of the sewage treatment device provided by the present disclosure includes the single chip microcomputer, and the lift pump and the gas pump which are connected respectively to the single chip microcomputer; the lift pump triggers the first switching signal according to the height of water level, wherein the first switching signal includes the starting signal and the shutdown signal; the single chip microcomputer regulates and controls according to the starting signal the delay time of starting to run the gas pump, and generates the delay start signal; alternatively, the single chip microcomputer regulates and controls according to the shutdown signal the delay time of stopping running of the gas pump, and generates the delay stop signal; the gas pump is controlled to perform the aeration and the backflow according to the delay start signal and the delay stop signal. The present disclosure can overcome the problems of modelization and poor variable impact resistance of the existing small sewage treatment devices, improve the stability of the control system and achieve an energy conservation effect.

An example of the present application not being part of the invention further provides an electronic device including a memory and a processor, wherein computer program runnable on the processor are stored in the memory, and when executing the computer program, the processor performs the steps of the control method of sewage treatment device provided in the above example.

An example of the present application not being part of the application further provides a computer readable storage medium, wherein computer programs are stored in the computer readable storage medium, and when the computer programs are executed by the processor, the steps of the control method of the sewage treatment device provided in the above example are performed.

In addition, in the description of the examples of the present application, it should also be indicated that unless otherwise expressly specified and defined, terms "mount", "in connection with", and "connect" should be construed in a broad sense. For example, the connection can be a fixed connection, a detachable connection, or an integrated connection; it can be a mechanical connection, or an electrical connection; it can be a direct connection or an indirect connection through an intermediate medium; and it also can also be an inner communication between two elements. For a person ordinary skilled in the art, specific meanings of the above mentioned terms in the present disclosure can be understood according to specific circumstances.

In the description of the present disclosure, it should be noted that orientational or positional relationships indicated by terms such as "central", "upper", "lower", "left", "right", "vertical", "horizontal", "inner" and "outer" are based on orientational or positional relationships as shown in the figures, merely for facilitating describing the present disclosure and simplifying the description, rather than indicating or implying that related devices or elements have to be in the specific orientation or to be configured and operated in specific the orientation, therefore, they should not be construed as limiting the present disclosure. Besides, terms such as "first", "second" and "third" are merely for descriptive purpose, but should not be construed as indicating or implying importance in relativity.

A computer program product of the control method of a sewage treatment device provided in the examples of the present application includes computer readable storage medium in which non-volatile program codes executable by a processor are stored, wherein instructions included in the program codes can be used for executing the method described in the previous method example, whose specific implementation can refer to the example of method, which will not be repeated here.

A person skilled in the art can clearly know that for convenient and concise description, the specific working processes of the above described systems, devices and units can refer to the corresponding processes in the foregoing example of method, which will not be repeated here.

In the examples provided by the present disclosure, it should be understood that the disclosed systems, devices and methods can also be realized in other ways. The above described examples of devices are merely illustrative, for example, the division of the units is merely a division of logic function, and other division ways may exist in actual implementation. For another example, multiple units or elements can be combined or can be integrated into another system, or some features can be omitted or not executed. On the other hand, the displayed or discussed inter coupling or direct coupling or communication can be communication or indirect coupling of communication interfaces, devices or units, and can be electrical, mechanical or in other forms.

The units described as separate components may be or may not be physically separated, and components displayed as units may be or may not be physical units, which means that, they can be located in one place or can be distributed to multiple network units. Some or all of these units can be selected according to actual requirements to realize the object of example scheme.

In addition, functional units in respective examples of the present disclosure can be integrated in one processing unit or each can individually and physically exist, or two or more of them can be integrated in one unit.

If the above functions are implemented in form of software function units and are used or sold as individual products, they can be stored in a non-volatile computer readable storage medium which is executable by processor. On the basis of such understanding, the technical solution of the present disclosure essentially or the part contributing to the prior art or a part of the technical solution can be embodied in form of a software product, the computer software product which is stored in a storage medium includes a number of instructions to allow a computer device (which could be a personal computer, a server or a network device, etc.) to execute some of or all of the steps of the method described in the examples of the present disclosure. The above-mentioned storage medium includes: U disk, mobile hard disk, ROM (Read-Only Memory), RAM (Random Access Memory), diskette or optical disk or other types of medium which is able to store program codes.

Finally it should be indicated that the above examples are merely specific embodiments of the present application, for describing the technical solution of the present disclosure rather than limiting it, while the protection scope of the present disclosure is not limited thereto. The protection scope of the present disclosure shall be based on the protection scope of the claims.

### Industrial Applicability

For the control system and method of a sewage treatment device provided by the present disclosure, the single chip microcomputer, and the lift pump and the gas pump which are connected respectively to the single chip microcomputer are included; the lift pump triggers the first switching signal according to the height of water level, wherein the first switching signal includes the starting signal and the shutdown signal; the single chip microcomputer regulates and controls according to the starting signal the delay time of starting to run the gas pump, and generates the delay start signal; alternatively, the single chip microcomputer regulates and controls according to the shutdown signal the delay time of stopping running the gas pump, and generates the delay stop signal; the gas pump is controlled to perform aeration and backflow according to the delay start signal and the delay stop signal. The present disclosure can overcome the problems of modelization and poor variable impact resistance of the existing small sewage treatment devices, improve the stability of control system, and achieve an energy conservation effect.

## Claims

1. A control system (10, 20, 30) for a sewage treatment device (40) comprising
a single chip microcomputer (20), a lift pump (10) connected to the single chip microcomputer (20) and a gas pump (30) connected to the single chip microcomputer (20),
wherein
the lift pump (10) is configured to trigger a first switching signal,
the single chip microcomputer (20) is configured to acquire the first switching signal and regulate and control a running mode of the gas pump (30) according to the first switching signal, and generate a second switching control signal for controlling the gas pump (30) in order to perform aeration and backflow in the sewage treatment device (40);
wherein the first switching signal comprises a starting signal and a shutdown signal, the second switching control signal comprises a delay start signal and a delay stop signal, and
the single chip microcomputer (20) is configured to regulate and control, according to the starting signal, a delay time of starting to run the gas pump (30), and generate the delay start signal;
the single chip microcomputer (20) is further configured to regulate and control, according to the shutdown signal, a delay time of stopping running of the gas pump (30), and generate the delay stop signal,
the system further comprises the sewage treatment device (40) connected to the lift pump (10) and to the gas pump (30),
wherein the sewage treatment device (40) is configured to adopt a biological treatment method for sewage treatment,
the gas pump (30) is respectively connected to an aeration zone and a gas lifting zone in the sewage treatment device (40) through two gas pipes, and is configured to regulate valves on the gas pipes to perform aeration and backflow according to the second switching control signal,
wherein the lift pump is configured to pump sewage to the sewage treatment device (40).

2. The system according to claim 1, **characterized in that**
the lift pump (10) is provided with a floating ball, wherein the floating ball is configured to control a switch of the lift pump (10) according to a height of water level in a pool body, to further trigger the first switching signal.

3. The system according to any one of claims 1 to 2, **characterized by** further comprising the user end device (50) connected to the lift pump (10), wherein the user end device (50) is configured to gather, through a pipe network, water discharged by users and enable the water to flow by gravity into a pool body where the lift pump (10) is located.

4. The system according to claim 1, **characterized in that**
the biological treatment method comprises an Anoxic-Oxic (AO) technology or an Anaerobic-Anoxic-Oxic (A2O) technology.

5. The system according to claim 3, **characterized in that**
the user end device (50) is configured for treating an amount of water ranging from 0.5m³/d to 200m³/d.

6. A control method of a sewage treatment using the system according to any one of claims 1 to 5, comprising:
a lift pump triggering a first switching signal according to a height of water level, wherein the first switching signal comprises a starting signal and a shutdown signal;
a single chip microcomputer regulating and controlling, according to the starting signal, a delay time of starting to run a gas pump, and generating a delay start signal; or,
the single chip microcomputer regulating and controlling, according to the shutdown signal, a delay time of stopping running of the gas pump, and generating a delay stop signal; and
controlling the gas pump to perform aeration and backflow according to the delay start signal and the delay stop signal.

7. The control method according to claim 6, **characterized in that** when a height of water level is detected to be higher than a predetermined height, the starting signal is triggered; and when the water level is detected to be lower than the predetermined height, the shutdown signal is triggered.

8. The control method according to claim 6 or 7, **characterized in that** after receiving the starting signal, the single chip microcomputer emits the delay start signal after a first predetermined time period.

9. The control method according to any one of claims 6 to 8, **characterized in that**
after receiving the shutdown signal, the single chip microcomputer emits the delay stop signal after a second predetermined time period.

## Patentansprüche

1. Steuerungssystem (10, 20, 30) für eine Abwasserbehandlungsvorrichtung (40) mit einem Ein-Chip-Mikrocomputer (20), einer mit dem Ein-Chip-Mikrocomputer (20) verbundenen Hebepumpe (10) und einer mit dem Ein-Chip-Mikrocomputer (20) verbundenen Gaspumpe (30), wobei
die Hebepumpe (10) zum Auslösen eines ersten Schaltsignals konfiguriert ist,
der Ein-Chip-Mikrocomputer (20) so konfiguriert ist, dass er das erste Schaltsignal erfasst und einen Betriebsmodus der Gaspumpe (30) entsprechend dem ersten Schaltsignal regelt und steuert und ein zweites Schaltsteuersignal zur Steuerung der Gaspumpe (30) erzeugt, um eine Belüftung und einen Rückfluss in der Abwasserbehandlungsvorrichtung (40) durchzuführen;
wobei das erste Schaltsignal ein Startsignal und ein Abschaltsignal umfasst, das zweite Schaltsteuersignal ein Verzögerungsstartsignal und ein Verzögerungsstoppsignal umfasst, und
der Ein-Chip-Mikrocomputer (20) so konfiguriert ist, dass er entsprechend dem Startsignal eine Verzögerungszeit des Starts zum Betreiben der Gaspumpe (30) reguliert und steuert und das Verzögerungsstartsignal erzeugt;
der Ein-Chip-Mikrocomputer (20) ferner so konfiguriert ist, dass er in Abhängigkeit von dem Abschaltsignal eine Verzögerungszeit für das Anhalten des Betriebs der Gaspumpe (30) regelt und steuert und das Verzögerungsstoppsignal erzeugt,
das System ferner die Abwasserbehandlungsvorrichtung (40) umfasst, die mit der Hebepumpe (10) und der Gaspumpe (30) verbunden ist,
wobei die Abwasserbehandlungsvorrichtung (40) so konfiguriert ist, dass sie ein biologisches Behandlungsverfahren zur Abwasserbehandlung anwendet,
die Gaspumpe (30) über zwei Gasleitungen mit einer Belüftungszone bzw. einer Gashebezone in der Abwasserbehandlungsvorrichtung (40) verbunden ist und so konfiguriert ist, dass sie Ventile an den Gasleitungen reguliert, um eine Belüftung und einen Rückfluss gemäß dem zweiten Schaltsteuersignal durchzuführen,
wobei die Hebepumpe so konfiguriert ist, dass sie Abwasser zu der Abwasserbehandlungsvorrichtung (40) pumpt.

2. System nach Anspruch 1, **dadurch gekennzeichnet, dass**
die Hebepumpe (10) mit einer schwimmenden Kugel versehen ist, wobei die schwimmende Kugel so konfiguriert ist, dass sie einen Schalter der Hebepumpe (10) in Abhängigkeit von einer Höhe des Wasserpegels in einem Beckenkörper steuert, um das erste Schaltsignal weiter auszulösen.

3. System nach einem der Ansprüche 1 bis 2, **gekennzeichnet durch**
ferner umfassend ein Benutzerendgerät (50), das mit der Hebepumpe (10) verbunden ist,
wobei das Benutzerendgerät (50) so konfiguriert ist, dass es über ein Rohrnetz das von den Benutzern abgegebene Wasser sammelt und es ermöglicht, dass das Wasser durch Schwerkraft in einen Beckenkörper fließt, in dem sich die Hebepumpe (10) befindet.

4. System nach Anspruch 1, **dadurch gekennzeichnet, dass**
das biologische Behandlungsverfahren eine Anoxic-Oxic (AO)-Technologie oder eine Anaerobic-Anoxic-Oxic (A2O)-Technologie umfasst.

5. System nach Anspruch 3, **dadurch gekennzeichnet, dass**
das Benutzerendgerät (50) für die Behandlung einer Wassermenge im Bereich von 0,5 m³/d bis 200 m³/d konfiguriert ist.

6. Steuerungsverfahren einer Abwasserbehandlung unter Verwendung des Systems nach einem der Ansprüche 1 bis 5, umfassend:
eine Hebepumpe, die ein erstes Schaltsignal in Abhängigkeit von der Höhe des Wasserstands auslöst, wobei das erste Schaltsignal ein Startsignal und ein Abschaltsignal umfasst;
einen Ein-Chip-Mikrocomputer, der entsprechend dem Startsignal eine Verzögerungszeit für den Start des Betriebs einer Gaspumpe regelt und steuert und ein Verzögerungsstartsignal erzeugt; oder
der Ein-Chip-Mikrocomputer regelt und steuert entsprechend dem Abschaltsignal eine Verzögerungszeit für das Anhalten des Betriebs der Gaspumpe, und
Erzeugen eines Verzögerungsstoppsignals; und
Steuern der Gaspumpe zur Durchführung von Belüftung und Rückströmung entsprechend dem Verzögerungsstartsignal und dem Verzögerungsstoppsignal.

7. Steuerungsverfahren nach Anspruch 6, **dadurch gekennzeichnet, dass**
das Startsignal ausgelöst wird, wenn festgestellt wird, dass die Höhe des Wasserstands höher als eine vorbestimmte Höhe ist; und das Abschaltsignal ausgelöst wird, wenn festgestellt wird, dass der Wasserstand niedriger als die vorbestimmte Höhe ist.

8. Steuerungsverfahren nach Anspruch 6 oder 7, **dadurch gekennzeichnet, dass**
nach dem Empfangen des Startsignals der Ein-Chip-Mikrocomputer das Verzögerungsstartsignal nach einer ersten vorbestimmten Zeitspanne ausgibt.

9. Steuerungsverfahren nach einem der Ansprüche 6 bis 8, **dadurch gekennzeichnet, dass**
der Ein-Chip-Mikrocomputer nach dem Empfangen des Abschaltsignals das Verzögerungsstoppsignal nach einer zweiten vorbestimmten Zeitspanne ausgibt.

## Revendications

1. Un système de commande (10, 20, 30) pour un dispositif (40) de traitement des eaux usées comprenant
un micro-ordinateur (20) à puce unique, une pompe de relevage (10) connectée au micro-ordinateur (20) à puce unique et une pompe à gaz (30) connectée au micro-ordinateur (20) à puce unique,
la pompe de relevage (10) étant configurée pour déclencher un premier signal de commutation,
le micro-ordinateur (20) à puce unique étant configuré pour acquérir le premier signal de commutation et réguler et contrôler un mode de fonctionnement de la pompe à gaz (30) selon le premier signal de commutation, et pour générer un deuxième signal de commande de commutation de façon à commander la pompe à gaz (30) afin d'effectuer une aération et un reflux dans le dispositif (40) de traitement des eaux usées ;
le premier signal de commutation comprenant un signal de démarrage et un signal d'arrêt, le deuxième signal de commande de commutation comprenant un signal de retard de démarrage et un signal de retard d'arrêt, et
le micro-ordinateur (20) à puce unique étant configuré de façon à réguler et commander, en fonction du signal de démarrage, un temps de retard de démarrage pour faire fonctionner la pompe à gaz (30), et à générer le signal de retard de démarrage ;
le micro-ordinateur (20) à puce unique étant en outre configuré de façon à réguler et commander, en fonction du signal d'arrêt, un temps de retard d'arrêt du fonctionnement de la pompe à gaz (30), et à générer le signal de retard d'arrêt,
le système comprenant en outre le fait que le dispositif (40) de traitement des eaux usées soit relié à la pompe de relevage (10) et à la pompe à gaz (30), le dispositif (40) de traitement des eaux usées étant configuré pour adopter une méthode de traitement biologique pour le traitement des eaux usées,
la pompe à gaz (30) étant respectivement reliée à une zone d'aération et à une zone de relevage de gaz dans le dispositif (40) de traitement des eaux usées par deux conduites de gaz, et étant configurée de façon à réguler des vannes sur les conduites de gaz afin d'effectuer l'aération et le reflux selon le deuxième signal de commande de commutation,
la pompe de relevage étant configurée pour pomper les eaux usées dans le dispositif (40) de traitement des eaux usées.

2. Le système selon la revendication 1, **caractérisé en ce que** la pompe de relevage (10) est pourvue d'une boule flottante, la boule flottante étant configurée pour commander un interrupteur de la pompe de relevage (10) en fonction d'une hauteur de niveau d'eau dans un corps de bassin, afin de déclencher en outre le premier signal de commutation.

3. Le système selon l'une quelconque des revendications 1 à 2, **caractérisé par**
le fait de comprendre en outre que le dispositif (50) d'utilisateur final soit relié à la pompe de relevage (10), le dispositif (50) d'utilisateur final étant configuré pour recueillir, à travers un réseau de canalisations, l'eau évacuée par les utilisateurs et permettre à l'eau de s'écouler par gravité dans un corps de bassin dans lequel se trouve la pompe de relevage (10).

4. Le système selon la revendication 1, **caractérisé en ce que** la méthode de traitement biologique comprend une technologie Anoxique-Oxique (AO) ou une technologie Anaérobie-Anoxique-Oxique (A2O).

5. Le système selon la revendication 3, **caractérisé en ce que** le dispositif (50) d'utilisateur final est configuré de façon à traiter une quantité d'eau allant de 0,5 m³/j à 200 m³/j.

6. Un procédé de commande d'un traitement des eaux usées utilisant le système selon l'une quelconque des revendications 1 à 5, comprenant :
le fait qu'une pompe de relevage déclenche un premier signal de commutation en fonction d'une hauteur de niveau d'eau, le premier signal de commutation comprenant un signal de démarrage et un signal d'arrêt ;
le fait qu'un micro-ordinateur à puce unique régule et commande, en fonction du signal de démarrage, un temps de retard de démarrage pour faire fonctionner une pompe à gaz, et génère un signal de retard de démarrage ; ou,
le fait que le micro-ordinateur à puce unique régule et commande, en fonction du signal d'arrêt, un temps de retard d'arrêt du fonctionnement de la pompe à gaz, et génère un signal de retard d'arrêt ; et
le fait que la pompe à gaz soit commandée de façon à effectuer une aération et un reflux en fonction du signal de retard de démarrage et du signal de retard d'arrêt.

7. Le procédé de commande selon la revendication 6, **caractérisé en ce que**
lorsqu'une hauteur de niveau d'eau est détectée comme étant supérieure à une hauteur prédéterminée, le signal de démarrage est déclenché ; et lorsque le niveau d'eau est détecté comme étant inférieur à la hauteur prédéterminée, le signal d'arrêt est déclenché.

8. Le procédé de commande selon la revendication 6 ou la revendication 7, **caractérisé en ce que**
après réception du signal de démarrage, le micro-ordinateur à puce unique émet le signal de retard de démarrage après une première période de temps prédéterminée.

9. Le procédé de commande selon l'une quelconque des revendications 6 à 8, **caractérisé en ce que**
après réception du signal d'arrêt, le micro-ordinateur à puce unique émet le signal de retard d'arrêt après une deuxième période de temps prédéterminée.
